# EUROPÄISCHE PATENTANMELDUNG

(11) **EP 4 443 232 A1**
(43) Veröffentlichungstag der Anmeldung: **09.10.2024**
(21) Anmeldenummer: 24162691.0
(22) Anmeldetag: 11.03.2024
(51) Int. Cl.: G03B 15/00, G03B 17/02, G03B 17/08, G03B 17/48, G03B 42/00, G08G 1/00

(54) **VERKEHRSÜBERWACHUNGSEINRICHTUNG MIT HEXAGONALEM GEHÄUSE**

(30) Priorität: 27.03.2023 EP 23164500
(71) Anmelder: Kistler Holding AG, 8408 Winterthur (CH)
(72) Erfinder: Braner, Sebastian, 88271 Wilhelmsdorf (DE)

(57) **Zusammenfassung**

Die Erfindung betrifft eine Verkehrsüberwachungseinrichtung (100) mit einem Gehäuse (110) zur Überwachung mindestens eines Teilbereichs (210) einer Strasse (200); wobei das Gehäuse (110) mindestens einen Innenraum (120) aufweist; wobei im Innenraum (120) mindestens eine Bildaufnahmeeinrichtung (7) angeordnet ist; wobei das Gehäuse (110) für jede Bildaufnahmeeinrichtung (7) mindestens einen transparenten Bereich (8) aufweist; wobei das Gehäuse (110) zumindest teilweise entlang einer weitgehend vertikalen Achse (Z) ausgestaltet ist; wobei die Bildaufnahmeeinrichtung (7) im Gehäuse (110) derart hinter dem transparenten Bereich (8) angeordnet ist, dass der mindestens eine Teilbereich (210) der Strasse (200) mittels der Bildaufnahmeeinrichtung (7) erfassbar ist; wobei eine weitgehend horizontale Ebene (XY) senkrecht zur vertikalen Achse (Z) ist; wobei das Gehäuse (110) zumindest in der weitgehend horizontalen Ebene (XY) einen hexagonalen Querschnitt (HQ) aufweist.

## Beschreibung

### Technisches Gebiet

Die Erfindung betrifft eine Verkehrsüberwachungseinrichtung mit hexagonalem Gehäuse.

### Stand der Technik

Eine Verkehrsüberwachungseinrichtung überwacht den Verkehr auf einer Strasse. Die Verkehrsüberwachungseinrichtung ist an einem Seitenrand einer Strasse oder auf einem mittleren Streifen einer Strasse.

Eine Strasse weist im Allgemeinen eine oder mehreren Richtungsfahrbahnen mit jeweils einer oder mehreren Fahrspuren. Fahrzeuge fahren auf der Strasse in eine durch die Richtungsfahrbahn vorgegebenen Richtung. Eine Strasse ist beispielsweise eine Landstrasse mit zwei Richtungsfahrbahnen entgegengesetzter Richtung mit jeweils einer Fahrspur. Eine Strasse ist beispielsweise auch eine Autobahn mit zwei Richtungsfahrbahnen entgegengesetzter Richtung mit jeweils mehreren Fahrspuren. Eine Strasse weist immer zwei Seitenränder auf und kann einen mittleren Streifen aufweisen, welcher nicht als Fahrbahn genutzt wird. Oft weist ein mittlerer Streifen, kurz Mittelstreifen, eine bauliche Trennung der Richtungsfahrbahnen auf.

Eine Verkehrsüberwachungseinrichtung weist ein Gehäuse auf. Im Gehäuseinneren ist üblicherweise eine Bildaufnahmeeinrichtung, beispielsweise eine Kamera, eine Kamera mit einem Blitzlicht oder ähnliches angeordnet. Die Verkehrsüberwachungseinrichtung ist eingerichtet mindestens einen Teilbereich der Strasse mittels der Bildaufnahmeeinrichtung zu erfassen. Das Gehäuse weist üblicherweise einen transparenten Bereich auf. Die Bildaufnahmeeinrichtung ist derart im inneren Angeordnet, dass der Teilbereich der Strasse durch den transparenten Bereich mittels der Bildaufnahmeeinrichtung erfassbar ist.

Die Verkehrsüberwachungseinrichtung ist neben der Strasse auf dem Seitenrand oder auf dem Mittelstreifen angeordnet. Die Bildaufnahmeeinrichtung weist eine Bildaufnahmerichtung auf, welche normalerweise weitgehend senkrecht zum transparenten Bereich angeordnet ist. Der transparente Bereich ist durchlässig für sichtbares Licht sowie für Licht im nahen Infrarotbereich. Die Bildaufnahmerichtung ist eingerichtet ein Fahrzeug weitgehend in oder gegen seine Bewegungsrichtung auf der Strasse zu erfassen. Das Fahrzeug wird somit in Frontalansicht oder in Heckansicht erfasst. Die Bilderfassungsrichtung ist daher üblicherweise in einem flachen Winkel kleiner 30° zur Bewegungsrichtung von Fahrzeugen auf der Richtungsfahrbahn angeordnet.

Eine Verkehrsüberwachungseinrichtung kann mehrere Bildaufnahmeeinrichtungen aufweisen. Diese können verschiedene Teilbereiche einer Strasse erfassen.

Verkehrsüberwachungseinrichtungen sind oft entlang einer vertikalen Achse in Form einer Säule ausgeführt, welche in horizontaler Ebene einen mit rechteckigen Querschnitt aufweist. Das Gehäuse hat demnach vier Wandungen, wobei mindestens eine der Wandungen den transparenten Bereich aufweist. Ist die Bildaufnahmeeinrichtung in einem rechteckigen Gehäuse angeordnet, so ist eine Wandung derart zur Fahrbahn ausgerichtet, dass die Bildaufnahmerichtung einen flachen Winkel kleiner 30° zur Bewegungsrichtung von Fahrzeugen auf der Richtungsfahrbahn bildet. Sollen zwei Bildaufnahmeeinrichtungen im Gehäuse angeordnet sein, beispielsweise zur Erfassung einer Frontansicht eines Fahrzeugs auf einer Richtungsfahrbahn mit einer ersten Bildaufnahmeeinrichtung, als auch einer Heckansicht eines Fahrzeugs auf derselben Richtungsfahrbahn, so kann die Wandung nicht im flachen Winkel angeordnet werden. Es werden üblicherweise Wandung und jeweilige transparente Bereiche im Winkel von 45° zur Fahrbahn angeordnet, wobei die jeweilige Bildaufnahmerichtung nicht mehr normal auf dem transparenten Bereich steht. Auch ist der Platz innerhalb des Gehäuses nicht ideal nutzbar, insbesondere bei Anordnung zweier Bildaufnahmeeinrichtungen welche Front- und Heckansicht eines Fahrzeuges auf der gleichen Richtungsfahrbahn erfassen sollen. Ein rechteckiges Gehäuse ist daher unvorteilhaft für die optische Erfassung von Fahrzeugen durch eine Verkehrsüberwachungseinrichtung.

Auch sind Verkehrsüberwachungseinrichtungen bekannt, welche in horizontaler Ebene einen runden Querschnitt aufweisen. Die Wandung des Gehäuses ist dabei zylinderförmig ausgeführt. Ein transparenter Bereich kann nun ebenfalls die Formgebung eines Zylindermantelteils aufweisen. Derart gebogene transparente Bereiche sind jedoch vergleichsweise teuer in der Herstellung gegenüber transparenten Bereichen in Form flacher Scheiben. Zudem kann die Biegung des transparenten Materials zu Verzerrungen des erfassten Bildes kommen auf Grund unterschiedlicher Brechungsindizes von Luft/transparenten Material. Wird hingegen ein flacher transparenter Bereich in einen gebogenen Zylindermantel eingesetzt, so entstehen durch die unterschiedliche Formgebung Kanten und Absätze in der Wandung. Dies ist nachteilig, da auf der Kante liegende Gegenstände den Erfassungsbereich der Bildaufnahmeeinrichtung beeinträchtigen können. Störende Gegenstände sind beispielsweise Laub, mutwillig abgestellte Gegenstände oder auf der Kante sitzende Vögel. Dies ist unvorteilhaft für die optische Erfassung von Fahrzeugen.

Aufgabe der Erfindung ist es ein Gehäuse einer Verkehrsüberwachungseinrichtung zu verbessern, dass die erwähnten Nachteile verringert werden. Eine weitere Aufgabe ist eine möglichst ökonomische Fertigung der Verkehrsüberwachungseinrichtung.

### Darstellung der Erfindung

Die Aufgabe wird durch die Merkmale der unabhängigen Ansprüche gelöst.

Die Erfindung betrifft Verkehrsüberwachungseinrichtung mit einem Gehäuse zur Überwachung mindestens eines Teilbereichs einer Strasse. Das Gehäuse weist mindestens einen Innenraum auf. Im Innenraum können elektronische Geräte, Kabel, etc. angeordnet sein. Das Gehäuse schützt den Innenraum vor äusseren Einflüssen, beispielsweise Feuchte, Regen, Staub, usw. Im Innenraum ist mindestens eine Bildaufnahmeeinrichtung angeordnet. Das Gehäuse weist für jede Bildaufnahmeeinrichtung mindestens einen transparenten Bereich auf. Das Gehäuse ist zumindest teilweise entlang einer weitgehend vertikalen Achse ausgestaltet. Die Bildaufnahmeeinrichtung ist im Gehäuse derart hinter dem transparenten Bereich angeordnet, dass der mindestens eine Teilbereich der Strasse mittels der Bildaufnahmeeinrichtung erfassbar ist. Eine Bildaufnahmeeinrichtung ist beispielsweise eine Kamera, welche durch den transparenten Bereich, beispielsweise eine Glasscheibe oder eine durchsichtige Kunststoffscheibe. Eine weitgehend horizontale Ebene erstreckt sich senkrecht zur vertikalen Achse.

Das Gehäuse weist erfindungsgemäss einen zumindest in der weitgehend horizontalen Ebene einen hexagonalen Querschnitt auf.

Ein hexagonaler Querschnitt ist vorteilhaft, da das Gehäuse keine weitgehend runden Bereiche aufweist, welche einen transparenten Bereich mit entsprechender runder Formgebung aufweisen müsste. Zudem weist das Gehäuse im Gegensatz zu einem Gehäuse mit rechteckigem Querschnitt mehr Seiten auf, welche mit unterschiedlichen Winkel zueinander angeordnet sind. Es bestehen daher mehr Möglichkeiten für eine Ausrichtung der Bildaufnahmeeinrichtung zu einem im Gehäuse angeordneten transparenten Bereich, verglichen mit einem rechteckigen Gehäuse.

Unter durchsichtig wird, wenn nicht anders beschrieben, im Folgenden immer eine Durchlässigkeit für elektromagnetische Wellen in mindestens einem 10 nm (Nanometer) breiten Wellenlängenband im sichtbaren Wellenlängenbereich zwischen 400 nm und 780 nm und/oder im nahen Infrarotbereich IR-A zwischen 780 nm und 1400nm verstanden, wobei mindestes 25% der einfallenden elektromagnetischen Strahlung transmittiert werden muss.

Der transparente Bereich kann auch einen optischen Bandfilter aufweisen. In diesem Fall werden nur Wellenlängen eines oder mehrerer optischer Wellenlängenbereiche transmittiert. Bevorzugt weist der transparente Bereich einen Rotfilter auf, welcher rotes Licht über 600 nm und längerwelliges Licht passieren lässt.

Der hexagonale Querschnitt weist eine erste Seite, eine zweite Seite, eine dritte Seite, eine vierte Seite, eine fünfte Seite, und eine sechste Seite auf. Je zwei Seiten sind weitgehend parallel zueinander angeordnet.

Das Gehäuse weist mindestens sechs Wandungen auf, welche weitgehend vertikal ausgeführt sind. Die erste Seite liegt in der Ebene einer ersten Wandung. Die zweite Seite liegt in der Ebene einer zweiten Wandung. Die dritte Seite liegt in der Ebene einer dritten Wandung. Die vierte Seite liegt in der Ebene einer vierten Wandung. Die fünfte Seite liegt in der Ebene einer fünften Wandung. Die sechste Seite liegt in der Ebene einer sechsten Wandung.

Die erste Wandung und die zweite Wandung und die dritte Wandung und die vierte Wandung und die fünfte Wandung und die sechste Wandung sind zumindest teilweise parallel zur vertikalen Achse.

Die erste Wandung ist vorteilhafterweise vollständig lichtundurchlässig ausgestaltet. Die vierte Wandung ist vollständig lichtundurchlässig ausgestaltet. Die erste Seite ist weitgehend parallel zur vierten Seite ausgerichtet. Die Verkehrsüberwachungseinrichtung ist eingerichtet Fahrzeuge auf einem Teilbereich einer Strasse zu erfassen. Wie bereits ausgeführt, wird dabei die Fahrzeugfront und/oder das Fahrzeugheck erfasst. Bei einer Anordnung der Verkehrsüberwachungseinrichtung zwischen zwei antiparallel ausgerichtenten Richtungsfahrbahnen sind demnach im Innenraum maximal für jede Richtungsfahrbahn je maximal zwei Bildaufnahmeeinrichtungen angeordnet. Daher sind in jedem Fall mindestens zwei Seiten, bzw. zwei Wandungen des Gehäuses vorhanden, in denen keine Bildaufnahmeeinrichtung angeordnet ist. Diese mindestens zwei Wandungen sind vorteilhafterweise lichtundurchlässig, um Lichteinfall in den Innenraum des Gehäuses zu minimieren, welcher zu einer Störung der im Gehäuseinneren angeordneten Bildaufnahmeeinrichtungen führen könnte, beispielsweise durch ungewollte Streuung des eingefallenen Lichtes im Innenraum.

Das Gehäuse weist vorteilhafterweise zwischen einem und vier transparente Bereiche auf. Im Innenraum ist für jeden transparenten Bereich eine Bildaufnahmeeinrichtung angeordnet. Jede der Bildaufnahmeeinrichtungen ist im Gehäuse derart hinter dem jeweiligen transparenten Bereich angeordnet, dass jede Bildaufnahmeeinrichtungen eingerichtet ist, je einen Teilbereich der Strasse zu erfassen.

Je ein transparenter Bereich ist vorteilhafterweise in je einer der zweiten Wandung oder dritten Wandung oder fünften Wandung oder sechsten Wandung angeordnet. Somit sind in maximal vier Wandungen transparente Bereiche angeordnet mit je einer Bildaufnahmeeinrichtung. Mit genau vier transparenten Bereichen wären mit der Verkehrsüberwachungseinrichtung für zwei gegenläufige Richtungsfahrbahnen je zwei Teilbereiche erfassbar, ein Teilbereich für die Erfassung der Fahrzeugfront eines in Richtung der Verkehrsüberwachungseinrichtung fahrenden Fahrzeuges und ein Teilbereich für die Erfassung des Fahrzeughecks eines sich von der Verkehrsüberwachungseinrichtung entfernenden Fahrzeuges.

Der transparente Bereich ist vorteilhafterweise parallel zur Ebene der Wandung angeordnet. Der Abstand des transparenten Bereichs von der Ebene der Wandung beträgt zwischen -50 mm und 50 mm. Üblicherweise ist ein transparenter Bereiche eine flache Glasscheibe oder eine Kunststoffscheibe. Diese sind oft in einem Rahmen in einer Wandung eingefügt. Der Rahmen kann dabei eine Beabstandung zwischen Wandung und transparenten Bereich senkrecht zur Ebene der Wandung beinhalten. Vorteilhafterweise ist der Abstand jedoch kleiner 50 mm in Richtung des Innenraums. Verschiebungen in Richtung des Innenraums werden mit negativen Zahlen beschrieben, ein Abstand von -50 mm bezeichnet daher einen Abstand in Richtung des Innenraums. So wird eine Kante bzw. ein Absatz vermieden, auf dem Schmutz akkumulieren kann. Auch wird vermieden, dass sich Wildtiere auf dem Absatz niederlassen. Vorteilhafterweise ist der Abstand auch kleiner 50 mm in entgegengesetzt zur Richtung des Innenraums. Ein solcher Abstand führt zwar nicht zu einem Absatz, bei dem Objekte auf dem Absatz den transparenten Bereich verdecken könnten. Es ist jedoch bekannt, dass sich oft Vögel auf Absätzen niederlassen und beim Verlassen des Absatzes vom Rand desselben Kot hinterlassen. Dieser kann ebenso zu einer Verunreinigung des transparenten Bereiches führen. Daher sind Abstände von Wandung und transparenten Bereich derart zwischen -50 mm und 50 mm zu wählen, um Beschriebenen Beeinträchtigungen zu vermeiden.

Im Gehäuse ist vorteilhafterweise für jede Bildaufnahmeeinrichtung mindestens eine Erfassungseinrichtung angeordnet. Die Erfassungseinrichtung ist eingerichtet, eine Geschwindigkeit eines Fahrzeugs im jeweiligen Teilbereich der Strasse zu ermitteln.

Das Gehäuse weist vorteilhafterweise für jede Erfassungseinrichtung einen Erfassungsbereich auf. Die Erfassungseinrichtung ist eingerichtet, ein Fahrzeug mit mindestens einem Erfassungsstrahl zu erfassen, beispielsweise elektromagnetische Strahlung wie Radarstrahlen, optische Strahlung, Infrarotstrahlung, Ultraviolettstrahlung, Schallwellen im hörbaren Bereich, Infraschall oder Ultraschall. Der Erfassungsbereich ist durchlässig für den Erfassungsstrahl. Der Erfassungsbereich ist dabei vorteilhafterweise in derselben Wandung wie der transparente Bereich für die jeweilige Bildaufnahmeeinrichtung angeordnet. So kann eine Erfassung eines Bildes automatisch ausgelöst werden, wenn der Erfassungsstrahl ein Fahrzeug erfasst hat. Auch kann vorteilhafterweise mittels Erfassungseinrichtung eine Geschwindigkeit eines Fahrzeuges erfasst werden. Eine Erfassung eines Bildes kann in dem Fall auch automatisch ausgelöst werden, wenn die Geschwindigkeit eines Fahrzeuges einen Geschwindigkeitsgrenzwert überschreitet.

Ein Erfassungsstrahl ist der Strahl, der von dem Fahrzeug zur Verkehrsüberwachungsanlage gerichtet ist. Bei einer aktiven Erfassungseinrichtung wird ein Taststrahl von der Erfassungseinrichtung ausgesendet. Eine passive Erfassungseinrichtung erfasst vom Fahrzeug der der Umgebung ausgesendete Strahlung.

Beispiele für passive Erfassungseinrichtungen, die keinen Taststrahl aufweisen, sind beispielsweise Stereokameras, oder Kontrastsensoren. Die Beleuchtung des Fahrzeugs geschieht hierbei durch eine Umgebungsbeleuchtung, wie der Sonne oder einer Strassenbeleuchtung.

Beispiele für aktive Erfassungseinrichtungen mit Taststrahl sind Ultraschallentfernungsmesser oder Laserentfernungsmesser (auch als LiDAR bekannt), bei denen ein Schall oder ein Laserstrahl ausgesendet, am Fahrzeug reflektiert und der reflektierte Strahl wieder erfasst wird, oder TOF Kameras (time-of-flight Kameras), bei denen die Ankunftszeit der Reflektion eines definierten ausgesendeten (monochromatischen) Lichtblitzes an einem Fahrzeug für jeden Pixel der Kamera ermittelt und optional mit der Laufzeit des Lichtes eine Entfernung berechnet wird. Es sind auch Radarantennen bekannt, welche aktiv Mikrowellen aussenden und am Fahrzeug reflektierte Wellen erfassen.

Jede Bildaufnahmeeinrichtung weist eine Bildaufnahmerichtung auf. Vorteilhafterweise ist die Bildaufnahmerichtung in der horizontalen Ebene des hexagonalen Querschnitts weitgehend senkrecht zum jeweiligen transparenten Bereich. Dies hat den Vorteil, dass Reflexionen am transparenten Bereich vermieden werden, welche das erfasste Bild verfälschen könnten.

Der hexagonale Querschnitt weist einen ersten Winkel, einen zweiten Winkel, einen dritten Winkel, einen vierten Winkel, einen fünften Winkel und einen sechsten Winkel auf. Die zweite Seite und die dritte Seite bilden den zweiten Winkel. Die fünfte Seite und die sechste Seite bilden den fünften Winkel. Die erste Seite und die zweite Seite bilden den ersten Winkel. Die dritte Seite und die vierte Seite bilden den dritten Winkel. Die vierte Seite und die fünfte Seite bilden den vierten Winkel. Die sechste Seite und die erste Seite bilden den ersten Winkel.

Eine Längsachse halbiert vorteilhafterweise den zweiten Winkel. Der zweite Winkel bestimmt so die Ausrichtung der zweiten Seite zur Längsachse. Der zweite Winkel bestimmt so auch die Ausrichtung der dritten Seite zur Längsachse. Dies ist vorteilhaft, da derart eine gleiche Ausrichtung von zwei Seiten zu gegenläufigen Richtungsfahrbahnen möglich ist, wobei auf der einen Richtungsfahrbahn die Fahrzeugfront und bei der anderen Richtungsfahrbahn das Fahrzeugheck erfassbar sind. Dies ist beispielsweise bei einer Aufstellung vorteilhaft, bei dem beispielsweise die fünfte und sechste Seite nahe Bauwerken oder ähnlichem platziert sind.

Vorteilhafterweise halbiert die Längsachse den fünften Winkel. Der fünfte Winkel bestimmt so die Ausrichtung der sechsten Seite zur Längsachse. Der fünfte Winkel bestimmt so auch die Ausrichtung der fünften Seite zur Längsachse. Dies ist vorteilhaft, da derart eine gleiche Ausrichtung von zwei Seiten zu gegenläufigen Richtungsfahrbahnen möglich ist, wobei auf der einen Richtungsfahrbahn die Fahrzeugfront und bei der anderen Richtungsfahrbahn das Fahrzeugheck erfassbar sind. Es ist aber auch denkbar, dass bei einer Aufstellung, bei dem die fünfte und sechste Seite nahe Bauwerken oder ähnlichem platziert sind der Winkel zwischen 90° und 180° gewählt wird. So ist das Gehäuse an der fünften und sechsten Seite flach ausgeführt und dadurch kompakt.

Besonders vorteilhaft weisen der zweite Winkel und der fünfte Winkel die gleiche Grösse auf. Sind je zwei Seiten parallel zueinander, so entsteht ein hexagonaler Querschnitt mit sechs gleichen Winkeln. Dies ermöglicht eine ökonomische Fertigung, da immer gleiche Winkel bearbeitet werden. Bearbeitungsmaschinen müssen nicht neu eingestellt werden.

Besonders bevorzugt ist der hexagonale Querschnitt spiegelsymmetrisch bezüglich der Längsachse ausgestaltet. Dies ist der Fall, wenn die Längsachse sowohl zweiten Winkel und fünften Winkel halbiert als auch zweite Seite und dritte Seite gleichlang sind als auch fünfte Seite und sechste Seite gleichlang sind.

Besonders bevorzugt weisen sowohl der zweite Winkel und der fünfte Winkel die gleiche Grösse auf und der hexagonale Querschnitt ist spiegelsymmetrisch bezüglich der Längsachse ausgestaltet. So weisen sowohl alle sechs Winkel die gleiche Grösse auf, und die zweite Seite, die dritte Seite, die fünfte Seite und die sechste Seite die gleiche Länge auf. Dies vereinfacht die Fertigung, da viele Elemente des Gehäuses auf gleiche Art gefertigt und/oder bearbeitet werden können, was zu einer Verringerung der Herstellungskosten führt.

Die horizontale Ebene ist weitgehend parallel zu einer Oberfläche der Strasse ausgerichtet.

In einer besonders ökonomischen Ausführungsform der Verkehrsüberwachungseinrichtung ist der hexagonale Querschnitt ein gleichmässiges Sechseck. In einem gleichmässigen Sechseck sind alle sechs Seiten gleich lang und alle Winkel an den sechs Ecken gleich gross. Ein gleichmässiges Sechseck wird auch reguläres Sechseck genannt. Die Fertigung ist besonders ökonomisch, Fertigung der Seiten und Winkel gleich ist. Umständliche Einstellungen für die Herstellung unterschiedlicher Gehäuseteile entfallen weitgehend und der Zusammenbau ist vereinfacht.

Die beschriebene Verkehrsüberwachungseinrichtung wird vorteilhafterweise bezügliche einer Strasse angeordnet, wobei die Strasse mindestens eine Fahrspur aufweist. Die Fahrspur verläuft beispielsweise weitgehend gerade. Die erste Seite ist weitgehend parallel zur Fahrspur angeordnet. Alternativ beschreibt die Fahrspur eine Kurve und die erste Seite ist tangential zur Fahrspur ausgerichtet.

Die Verkehrsüberwachungseinrichtung ist derart Angeordnet, dass durch Einstellung des zweiten Winkels die Ausrichtung der ersten Seite und der zweiten Seite bezüglich der Strasse derart bestimmt ist, dass die Bildaufnahmeeinrichtung zur Strasse ausrichtbar ist.

### Kurze Beschreibung der Zeichnungen

Im Folgenden wird die Erfindung beispielhaft unter Beizug der Figuren näher erklärt. Es zeigen
- Fig. 1: zeigt eine schematische Ansicht einer Strasse mit einer Verkehrsüberwachungseinrichtung nach dem Stand der Technik,
- Fig. 2: zeigt eine schematische Ansicht einer Strasse mit einer weiteren Verkehrsüberwachungseinrichtung nach dem Stand der Technik,
- Fig. 3: zeigt eine schematische Schnittansicht einer Verkehrsüberwachungseinrichtung nach dem Stand der Technik,
- Fig. 4: zeigt eine schematische Schnittansicht einer weiteren Verkehrsüberwachungseinrichtung nach dem Stand der Technik,
- Fig. 5: zeigt eine schematische Schnittansicht einer weiteren Verkehrsüberwachungseinrichtung nach dem Stand der Technik,
- Fig. 6: zeigt eine schematische perspektivische Ansicht einer Verkehrsüberwachungseinrichtung,
- Fig. 7: zeigt eine weitere schematische perspektivische Ansicht einer Verkehrsüberwachungseinrichtung,
- Fig. 8: zeigt eine schematische Schnittansicht einer Ausführungsform einer Verkehrsüberwachungseinrichtung,
- Fig. 9: zeigt eine schematische Schnittansicht einer weiteren Ausführungsform einer Verkehrsüberwachungseinrichtung,
- Fig. 10: zeigt eine schematische Schnittansicht einer weiteren Ausführungsform einer Verkehrsüberwachungseinrichtung,
- Fig. 11: zeigt eine schematische Schnittansicht einer weiteren Ausführungsform einer Verkehrsüberwachungseinrichtung,
- Fig. 12: eine schematische Ansicht einer Strasse mit einer Verkehrsüberwachungseinrichtung,
- Fig. 13: zeigt eine weitere schematische Ansicht einer Strasse mit einer Verkehrsüberwachungseinrichtung,
- Fig. 14: zeigt eine weitere schematische Ansicht einer Strasse mit einer Verkehrsüberwachungseinrichtung,
- Fig. 15: zeigt eine schematische perspektivische Ansicht einer weiteren Ausführungsform einer Verkehrsüberwachungseinrichtung,
- Fig. 16: zeigt eine schematische perspektivische Ansicht einer weiteren Ausführungsform einer Verkehrsüberwachungseinrichtung,
- Fig. 17: zeigt eine schematische perspektivische Ansicht einer weiteren Ausführungsform einer Verkehrsüberwachungseinrichtung,
- Fig. 18: zeigt eine weitere schematische Ansicht einer Strasse mit einer Verkehrsüberwachungseinrichtung.

### Wege zur Ausführung der Erfindung

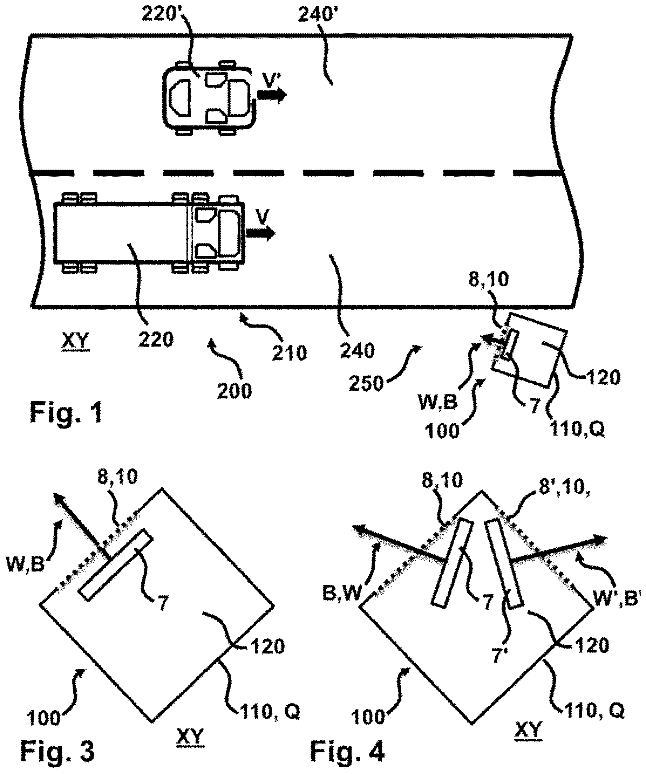

Fig. 1 zeigt eine schematische Ansicht einer Strasse 200 mit einer Verkehrsüberwachungseinrichtung 100 nach dem Stand der Technik in Aufsicht auf eine horizontale Ebene XY. Die Strasse weist eine Richtungsfahrbahn 210 mit zwei Fahrspuren 240,240' auf. Zwei Fahrzeuge 220,220' fahren mit je einer Geschwindigkeit V,V' in Richtung der Richtungsfahrbahn. Die Verkehrsüberwachungseinrichtung 100 ist in Aufsicht auf eine horizontale Ebene XY dargestellt und neben der Strasse 200 auf einem Seitenstreifen 250 angeordnet. Das Gehäuse 110 weist einen rechteckigen Querschnitt Q auf. Im Innenraum 120 des Gehäuses 110 ist eine Bildaufnahmeeinrichtung 7 angeordnet, mit einer Bildaufnahmerichtung B. Die Bildaufnahmerichtung B ist eingerichtet ein Bild eines Teilbereiches 210 der Strasse 200 zu erfassen. Die Bildaufnahmeeinrichtung 7 ist mit der Bildaufnahmerichtung B derart ausgerichtet, dass die Front des Fahrzeuges 220 im Teilbereich 210 erfassbar ist.

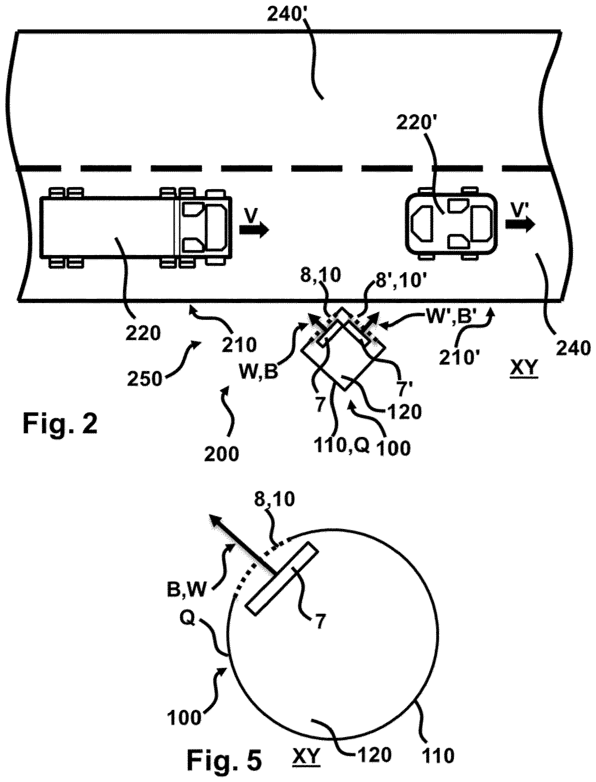

Fig. 2 zeigt ebenfalls eine schematische Ansicht einer Strasse, mit einer Verkehrsüberwachungseinrichtung 100 nach dem Stand der Technik in Aufsicht auf eine horizontale Ebene XY. Die Strasse ist analog zu Fig. 1 dargestellt. Die Verkehrsüberwachungseinrichtung 100 ist in Aufsicht auf eine horizontale Ebene XY dargestellt und neben der Strasse 200 auf einem Seitenstreifen 250 angeordnet. Das Gehäuse 110 weist einen rechteckigen Querschnitt Q auf. Im Innenraum 120 des Gehäuses 110 sind zwei Bildaufnahmeeinrichtungen 7,7' angeordnet, mit jeweils einer Bildaufnahmerichtung B,B'. Jede Bildaufnahmerichtung B,B' ist eingerichtet, ein Bild je eines Teilbereiches 210,210' der Strasse 200 zu erfassen. Die Bildaufnahmeeinrichtungen 7,7' sind mit der jeweiligen Bildaufnahmerichtung B,B' derart ausgerichtet, dass mit einer Bildaufnahmeeirichtung 7 die Front des Fahrzeuges 220 im Teilbereich 210 erfassbar ist und mit der anderen Bildaufnahmeeinrichtung 7' das Heck des Fahrzeuges im Teilbereich 210' erfassbar ist, wenn das Fahrzeug den Teilbereich 210' erreicht. Im Vergleich zu Fig. 1 ist zu erkennen, dass die Ausrichtung der Bildaufnahmeeinrichtung 7,7' nicht in einem flachen Winkel zur Fahrspur 240 der Strasse 200 möglich ist. Bei senkrechter Ausrichtung der Bildaufnahmerichtung B,B' zum jeweiligen transparenten Bereich 8,8' des Gehäuses 110 ist durch die rechteckige Formgebung des Gehäuses nur ein Winkel von 45° zur Fahrbahn möglich, was eine Aufnahme der Fahrzeugfront erschwert.

Fig. 3 zeigt die bekannte Verkehrsüberwachungseinrichtung 100 aus Fig. 1 im Detail. Das Gehäuse 110 weist einen rechteckigen Querschnitt Q auf. Im Innenraum 120 des Gehäuses 110 ist die Bildaufnahmeeinrichtung 7 angeordnet, mit einer Bildaufnahmerichtung B. Die Bildaufnahmerichtung B ist senkrecht zum transparenten Bereich 8 des Gehäuses 110 ausgerichtet.

In Fig. 4 ist eine alternative Ausführungsform einer Verkehrsüberwachungseinrichtung 100 im Detail dargestellt. Das Gehäuse 110 weist einen rechteckigen Querschnitt Q auf. Im Innenraum 120 des Gehäuses 110 sind zwei Bildaufnahmeeinrichtungen 7,7' angeordnet, mit jeweils einer Bildaufnahmerichtung B,B'. Die Bildaufnahmerichtungen B,B' sind nicht senkrecht zum jeweiligen transparenten Bereich 8,8' des Gehäuses 110 ausgerichtet, um eine Ausrichtung der Bildaufnahmerichtungen B,B' im flachen Winkel zur Fahrbahn 240 (nicht gezeigt) zu ermöglichen, wenn die Verkehrsüberwachungseinrichtung auf dem Seitenstreifen 250 (nicht gezeigt) angeordnet ist. Dies ist jedoch wegen möglicherweise auftretender Reflexionen am transparenten Bereich 8,8' unvorteilhaft, wie bereits beschrieben.

Eine weitere bekannte Formgebung einer Verkehrsüberwachungseinrichtung 100 ist in Fig. 5 schematisch in einer Schnittansicht entlang einer horizontalen Ebene XY dargestellt. Das Gehäuse 110 weist einen runden Querschnitt Q auf. Der transparente Bereich 8 zeigt die Form eines Kreisausschnitts. Dies ist unvorteilhaft, da die Fertigung eines runden transparenten Bereichs 8 teurer ist als die Fertigung eines planaren transparenten Bereichs 8. Zudem ist eine Verzerrung des zu erfassenden Bildes durch die runde Formgebung des transparenten Bereichs 8 wahrscheinlich.

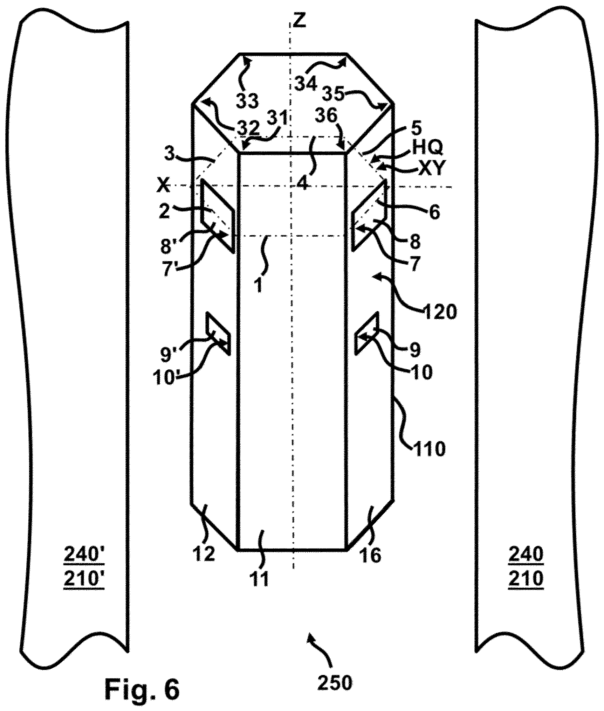

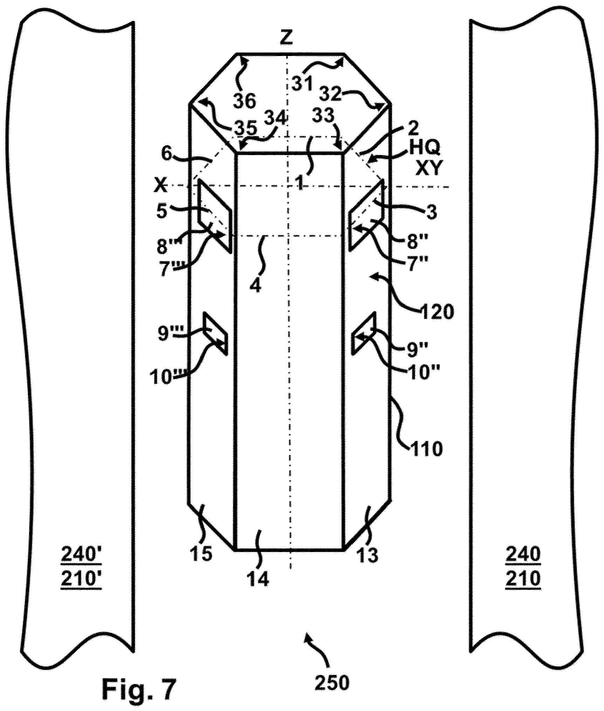

Eine erfindungsgemässe Verkehrsüberwachungseinrichtung 100 mit einem Gehäuse 110 zur Überwachung mindestens eines Teilbereichs 210 einer Strasse 200 ist schematisch in Fig. 6 und Fig. 7 dargestellt. Das Gehäuse weist in der gezeigten Ausführungsform exemplarisch vier transparente Bereiche 8,8',8",8‴ auf. Es sind jedoch ohne weiteres auch ein transparenter Bereich 8, zwei transparente Bereiche 8,8' oder drei transparente Bereiche 8,8', 8'' denkbar. Das Gehäuse 110 ist zumindest teilweise entlang einer weitgehend vertikalen Achse Z ausgestaltet. Eine weitgehend horizontale Ebene XY ist senkrecht zur vertikalen Achse Z.

Erfindungsgemäss weist das Gehäuse 110 zumindest in der weitgehend horizontalen Ebene XY einen hexagonalen Querschnitt HQ auf.

Der hexagonale Querschnitt HQ weist eine erste Seite 1, eine zweite Seite 2, eine dritte Seite 3, eine vierte Seite 4, eine fünfte Seite 5, und eine sechste Seite 6 auf. Je zwei Seiten 1,4,3,5,3,6 sind vorteilhafterweise weitgehend parallel zueinander angeordnet.

Die erste Seite 1 liegt vorteilhafterweise in der Ebene einer ersten Wandung 11, wie in Fig. 6 und Fig. 7 gezeigt. Die zweite 2 Seite liegt vorteilhafterweise in der Ebene einer zweiten Wandung 12. Die dritte Seite 3 liegt vorteilhafterweise in der Ebene einer dritten Wandung 13. Die vierte Seite 4 liegt vorteilhafterweise in der Ebene einer vierten Wandung 14. Die fünfte Seite 5 liegt vorteilhafterweise in der Ebene einer fünften Wandung 15. Die sechste Seite 6 liegt vorteilhafterweise in der Ebene einer sechsten Wandung 16. Die erste Wandung 11 und die zweite Wandung 12 und die dritte Wandung 13 und die vierte Wandung 14 und die fünfte Wandung 15 und die sechste Wandung 16 sind vorteilhafterweise zumindest teilweise parallel zur vertikalen Achse Z.

Bevorzugt ist die erste Wandung 11 vollständig lichtundurchlässig ausgestalte. Bevorzugt ist auch die vierte Wandung 14 vollständig lichtundurchlässig ausgestaltet. Eine lichtundurchlässige Wandung weist keinen transparenten Bereich 8,,8',8",8‴ auf.

Der hexagonale Querschnitt HQ weist bevorzugt einen ersten Winkel 31, einen zweiten Winkel 32, einen dritten Winkel 33, einen vierten Winkel 34, einen fünften Winkel 35 und einen sechsten Winkel 36 auf.

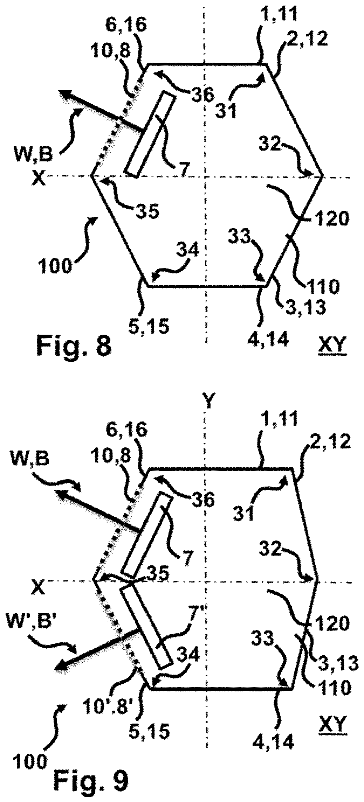

Fig. 8 zeigt eine schematische Darstellung einer Verkehrsüberwachungseinrichtung 100 in einer Schnittansicht entlang der XY Ebene. Das Gehäuse 110 weist einen Innenraum 120 auf. Im Innenraum 120 ist in der gezeigten Ausführungsform exemplarisch eine Bildaufnahmeeinrichtung 7 angeordnet. Das Gehäuse 110 weist in gezeigter Ausführungsform einen transparenten Bereich 8 auf. Die Bildaufnahmeeinrichtung 7 weist eine Bildaufnahmerichtung B auf. Es ist jedoch auch möglich, dass die Verkehrsüberwachungseinrichtung 100 zwei Bildaufnahmeeinrichtungen 7,7' je einem transparenten Bereichen 8,8', drei Bildaufnahmeeinrichtungen 7,7',7" je einem transparenten Bereichen 8,8',8" oder vier Bildaufnahmeeinrichtungen 7,7',7",7‴ je einem transparenten Bereichen 8,8',8",8‴ aufweist.

Das Gehäuse 110 weist bevorzugt zwischen einem und vier transparente Bereiche 8,8',8'',8''' auf. Im Innenraum 120 ist für jeden transparenten Bereich 8,8',8'',8''' eine Bildaufnahmeeinrichtung 7,7',7",7‴ angeordnet. Jede der Bildaufnahmeeinrichtungen 7,7',7",7‴ ist im Gehäuse 110 derart hinter dem jeweiligen transparenten Bereich 8,8',8",8‴ angeordnet, dass jede Bildaufnahmeeinrichtungen 7,7',7",7‴ eingerichtet ist je einen Teilbereich 210,210',210",210‴ der Strasse 200 zu erfassen. Je ein transparenter Bereich 8,8',8",8‴ ist in je einer der zweiten Wandung 12 oder dritten Wandung 13 oder fünften Wandung 15 oder sechsten Wandung 16 angeordnet.

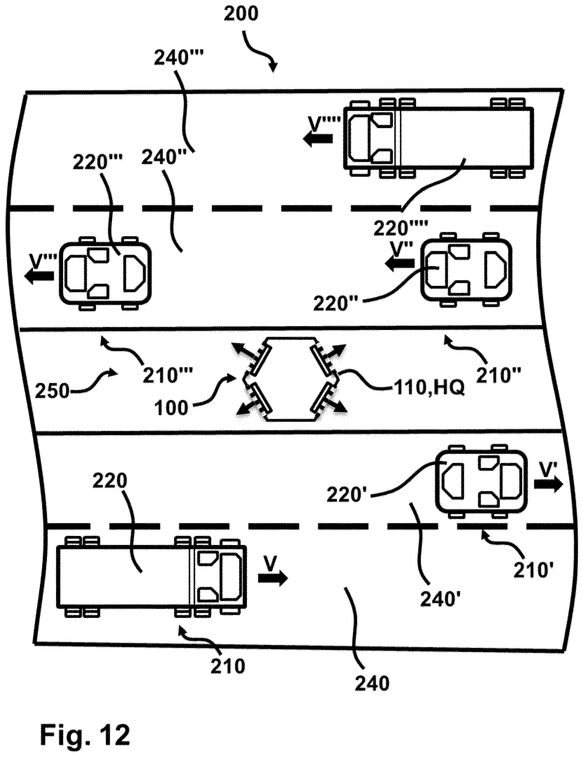

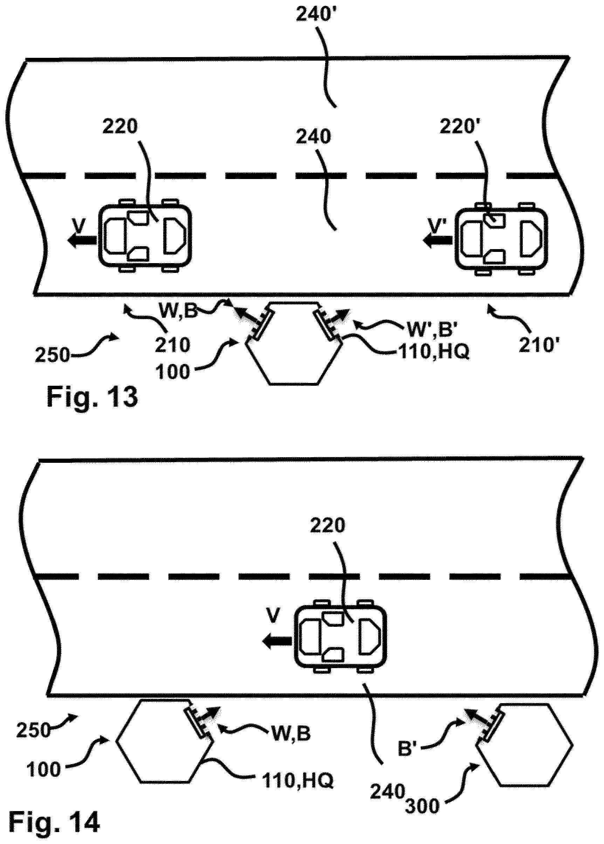

Im Gehäuse 110 ist für jede Bildaufnahmeeinrichtung 7,7',7",7‴ in der Ausführungsform der Fig. 6 und Fig. 7 mindestens eine Erfassungseinrichtung 9,9',9",9‴ angeordnet. Die Erfassungseinrichtung 9,9',9",9‴ ist eingerichtet eine Geschwindigkeit V,V',V",V‴ eines Fahrzeugs 220,220',220",220‴ im jeweiligen Teilbereich 210,210',210",210‴ der Strasse 200 zu ermitteln, wie in Fig. 12 und Fig. 13 schematisch dargestellt.

Das Gehäuse 110 weist für jede Erfassungseinrichtung 9,9',9",9‴ einen Erfassungsbereich 10,10',10",10‴ auf. Die Erfassungseinrichtung 9,9',9",9‴ ist eingerichtet ein Fahrzeug mit mindestens einem Erfassungsstrahl (nicht dargestellt) zu erfassen.

In den folgenden Abbildungen 8 bis 13 sind gleiche Bezugszeichen für gleiche Elemente genutzt.

Fig. 8 zeigt eine schematische Schnittansicht entlang der horizontalen Ebene XY einer Ausführungsform einer Verkehrsüberwachungseinrichtung 100 mit hexagonalem Querschnitt HQ. Das Gehäuse 110 weist beispielhaft eine Bildaufnahmeeinrichtung 7 und einen transparenten Bereich 8 auf.

Die Fig. 9, Fig. 10, und Fig. 11 zeigen alternative Ausführungsformen zur in Fig. 8 gezeigten. Die Verkehrsüberwachungseinrichtung 100 weist ein Gehäuse 110 mit einem hexagonalem Querschnitt HQ auf. In den Ausführungsformen der Fig. 8 bis Fig. 11 halbiert jeweils die Längsachse X den zweiten Winkel 32. Die Längsachse X halbiert auch den fünften Winkel 35.

Zudem ist in den Ausführungsformen der Verkehrsüberwachungseinrichtung 100 der hexagonale Querschnitt HQ jeweils spiegelsymmetrisch bezüglich der Längsachse X ausgestaltet. Es sind aber auch Ausführungsformen der Verkehrsüberwachungseinrichtung 100 denkbar, in denen beispielsweise die sechste Seite 6 und die zweite Seite 2 länger ausgeführt sind, wobei die erste Seite 1 entsprechend kürzer ausgeführt ist (nicht gezeigt).

In den Ausführungsformen der Fig. 8, Fig. 10 und Fig. 11 weist der zweite Winkel 32 und der fünfte Winkel 35 die gleiche Grösse auf.

Fig. 9 zeigt eine besondere Ausführungsform, bei welcher der zweite Winkel 32 besonders gross zwischen 90° und 180° ausgeführt ist, wodurch das Gehäuse an der zweiten Seite 2 und dritten Seite 3 besonders flach ausgeführt ist. Entsprechend sind zwei Bildaufnahmeeinrichtungen 7,7' im Gehäuse 110 angeordnet.

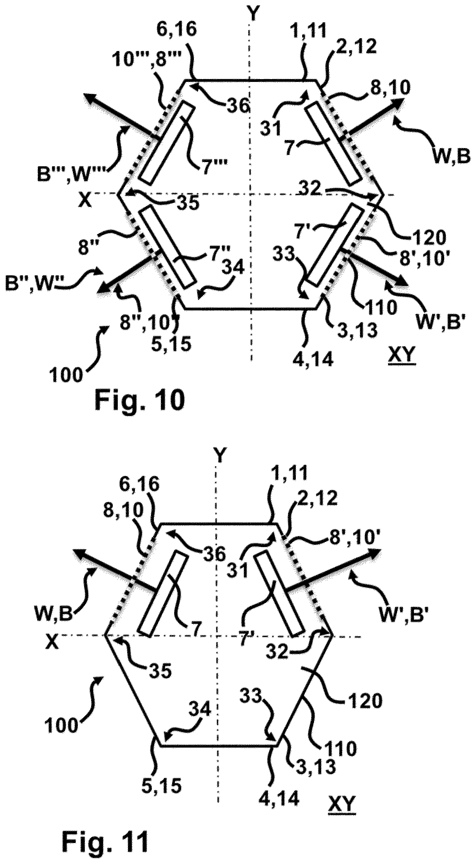

Fig. 10 zeigt eine Ausführungsform einer Verkehrsüberwachungseinrichtung 100 mit vier Bildaufnahmeeinrichtungen 7,7',7",7‴ mit den dazugehörigen transparenten Bereichen. Der hexagonale Querschnitt HQ bildet ein gleichmässiges Sechseck.

Fig. 11 zeigt eine Ausführungsform einer Verkehrsüberwachungseinrichtung 100 ähnlich der aus Fig. 8, wobei zwei Bildaufnahmeeinrichtungen 7,7' im Gehäuse 110 angeordnet sind.

Verschiedene Anordnungen einer Verkehrsüberwachungseinrichtung 100 bezüglich einer Strasse 200 sind in den Fig. 12 und Fig. 13 dargestellt. Die Strasse 200 weist mehrere Fahrspuren 240, 240', 240", 240‴ auf. Die Fahrspur 240, 240', 240", 240‴ verläuft im dargestellten Beispiel weitgehend gerade. Die erste Seite 1 des Gehäuses 110 ist weitgehend parallel zur Fahrspur 240, 240', 240", 240‴ angeordnet.

Fig. 12 zeigt eine schematische Ansicht einer Strasse 200 mit der Verkehrsüberwachungseinrichtung 100 aus Fig. 10 in einer Aufsicht auf die XY Ebene. Jede Bildaufnahmeeinrichtung 7,7',7",7‴ ist im Gehäuse 110 derart hinter dem jeweiligen transparenten Bereich 8,8',8",8‴ angeordnet, dass mindestens ein Teilbereich 210,210',210",210‴ der Strasse 200 mittels der Bildaufnahmeeinrichtung 7,7',7",7‴ erfassbar ist. Die Front eines Fahrzeuges 220' sowie das Heck eines weiteren Fahrzeuges 220 auf einer Fahrspur 240', sowie Front eines weiteren Fahrzeuges 220'' sowie das Heck eines weiteren Fahrzeuges 220‴ auf einer weiteren Fahrspur 240", sind somit erfassbar.

Fig. 13 zeigt eine schematische Ansicht einer Strasse 200 mit der Verkehrsüberwachungseinrichtung 100 aus Fig. 11 in einer Aufsicht auf die XY Ebene. Jede der zwei Bildaufnahmeeinrichtungen 7,7' ist im Gehäuse 110 derart hinter dem jeweiligen transparenten Bereich 8,8' angeordnet, dass mindestens ein Teilbereich 210,210',210",210‴ der Strasse 200 mittels der Bildaufnahmeeinrichtung 7,7' erfassbar ist. Die Front eines Fahrzeuges 220' sowie das Heck eines weiteren Fahrzeuges 220 sind somit erfassbar.

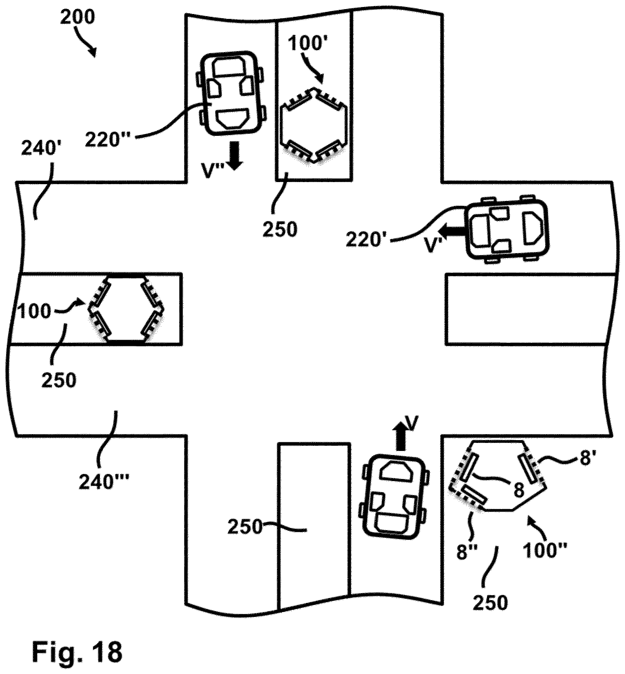

Es ist auch möglich die Verkehrsüberwachungseinrichtung 100 in Kreuzungsbereichen zweier Strassen zu verwenden, wie in Fig. 18 dargestellt. Es stehen hier verschiedene Aufstellungsorte zur Verfügung. Beispielsweise sind Verkehrsüberwachungseinrichtungen 100, 100' auf dem Mittelstreifen 250 angeordnet. Es ist auch exemplarisch eine Verkehrsüberwachungseinrichtung 100'' auf dem Seitenstreifen 250 angeordnet. Die Verkehrsüberwachungseinrichtung 100'' auf dem Seitenstreifen 250 ist hier exemplarisch in einer speziellen Ausführungsform mit drei Bildaufnahmeeinrichtungen 8,8',8"' und den jeweiligen Erfassungseinrichtungen (nicht dargestellt) dargestellt. Hierbei ist die Ausrichtung der Seiten 1,2,3,4,5,6 des hexagonalen Querschnitts HQ derart angeordnet, dass sowohl die Fahrspur 240 in Ost-West Ausrichtung als auch die Fahrspur in Nord-Süd Ausrichtung in einem flachen Winkel zur Bildaufnahmerichtung B,B',B",B‴ angeordnet ist.

Das Gehäuse 110 der Verkehrsüberwachungseinrichtung 100 ist in einer Ausführungsform über die gesamte vertikale Achse Z der Verkehrsüberwachungseinrichtung 100 einen hexagonalen Querschnitt HQ aufweisen, wie in den Ausführungsformen der Fig. 6 und 7 dargestellt. Dabei steht das Gehäuse 110 mit dem hexagonalen Querschnitt HQ auf dem Untergrund.

In einigen Fällen ist es auf Grund bestimmter Gesetzgebungen erforderlich, dass bei einer Überwachung eines Fahrzeugs 220 sowohl das Heck als auch die Front weitgehend zeitgleich durch jeweils eine Bildaufnahmeeinrichtung erfasst werden. Es bedarf jedoch nur einer Erfassungseinrichtung 9, um die Geschwindigkeit v des Fahrzeuges 220 zu erfassen. Fig. 14 zeigt eine schematische Ansicht einer Strasse 200 mit einer Verkehrsüberwachungseinrichtung 100 aus Fig. 11 in einer Aufsicht auf die XY Ebene. Die Verkehrsüberwachungseinrichtung ist eingerichtet, die Front des Fahrzeuges 220 mit der Bildaufnahmeeinrichtung 7 durch den transparenten Bereich 8 zu erfassen. Die Geschwindigkeit v des Fahrzeugs ist durch die Erfassungseinrichtung 9 der Verkehrsüberwachungseinrichtung 100 erfassbar. Die Verkehrsüberwachungseinrichtung 100 ist auf dem Seitenstreifen 250 oder dem Mittelstreifen 250 angeordnet. In Fahrtrichtung der Fahrspur 240 beabstandet von der Verkehrsüberwachungseinrichtung 100 ist eine Zusatzeinrichtung 300 angeordnet. Die Zusatzeinrichtung 300 ist auf dem Seitenstreifen 250 oder dem Mittelstreifen 250 angeordnet. Die Zusatzeinrichtung 300 weist mindestens einen transparenten Bereich 8' und mindestens eine Bilderfassungseinrichtung 7' auf. Die Zusatzeinrichtung 300 kann in Gehäuseform analog zur Verkehrsüberwachungseinrichtung 100 ausgestaltet sein. Auch andere Gehäuseformen sind für die Zusatzeinrichtung 300 denkbar. Das Heck des Fahrzeuges 220 ist durch die Bilderfassungseinrichtung 7' der Zusatzeinrichtung 300 erfassbar. Die Bilderfassungseinrichtung 7' der Zusatzeinrichtung 300 ist dabei vorteilhafterweise durch ein Signal der Verkehrsüberwachungseinrichtung 100 auslösbar. Das Signal kann durch ein Kabel oder drahtlos übertragbar sein.

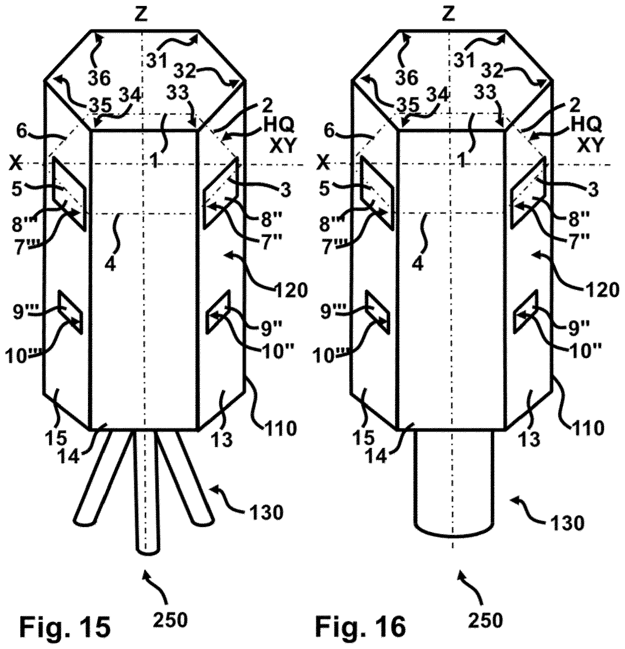

In einer weiteren Ausführungsform weist die Verkehrsüberwachungseinrichtung 100 ein Stützelement 130 auf. Das Gehäuse mit dem hexagonalen Querschnitt HQ ist entlang der vertikalen Achse Z über dem Stützelement 130 angeordnet. Die Verkehrsüberwachungsanlage 100 ist auf einem Untergrund angeordnet. Das Stützelement ist zwischen Untergrund und dem hexagonalen Gehäuse angeordnet. Ein Stützelement ist beispielsweise ein Dreibein 130, ein quaderförmiger Sockel 130, ein säulenförmiger Sockel, ein zylinderförmiger Sockel, oder ein anderweitig geformtes Stützelement 130. Die Fig. 15 zeigt zur Veranschaulichung eine Ausführungsform einer Verkehrsüberwachungseinrichtung 100 beispielsweise ein Stützelement 130 in Form eines Dreibeins 130. Und die Fig. 16 zeigt Abbildung 15 zeigt zur Veranschaulichung beispielsweise ein Stützelement 130 in Form eines Dreibeins 130.

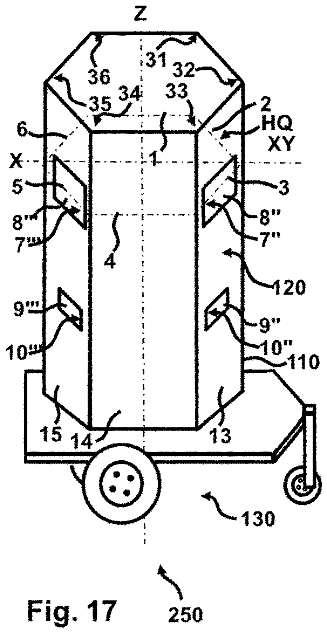

In einer besonderen Ausführungsform einer Verkehrsüberwachungseinrichtung 100 ist das Stützelement 130 auf dem Untergrund verfahrbar. Das Stützelement 130 ist beispielsweise in Form eines Anhängers 130 für Motorfahrzeuge ausgeführt, wie in Fig. 17 dargestellt.

Die in dieser Schrift offenbarten Ausführungsformen einer Verkehrsüberwachungseinrichtung 100 sind in ihren Eigenschaften selbstverständlich miteinander kombinierbar. So ist insbesondere jede Verkehrsüberwachungseinrichtung 100 mit hexagonalem Querschnitt HQ eingerichtet, zwischen einer und vier Bilderfassungseinrichtungen 7,7',7",7‴ und dazugehörige transparente Bereiche 8,8',8",8‴ aufzuweisen, welche in jeweils unterschiedlichen Seiten 1,2,3,4,5,6 des Gehäuses. Es sind explizit in dieser Schrift auch Ausführungsformen einbezogen, welche eine Kombination der Merkmale hierin beschriebener Ausführungsformen aufweisen.

### Bezugszeichenliste

1 Seite
2 Seite
3 Seite
4 Seite
5 Seite
6 Seite
7 , 7', 7", 7‴ Bildaufnahmeeinrichtung
8 , 8' ,8" ,8‴ Transparenter Bereich
9 , 9', 9", 9‴ Erfassungseinrichtung
10 , 10', 10'', 10''' Erfassungsbereich
11 Wandung
12 Wandung
13 Wandung
14 Wandung
15 Wandung
16 Wandung
31 Winkel
32 Winkel
33 Winkel
34 Winkel
35 Winkel
36 Winkel
100 , 100', 100''' Verkehrsüberwachungseinrichtung
110 Gehäuse
120 Innenraum, Raum
130 Stützelement, Dreibein, Sockel
200 Strasse
210 , 210', 210" ,210‴ Teilbereich
220 , 220', 220", 220‴ Objekt, Fahrzeug
230 Oberfläche
240 , 240', 240", 240‴ Fahrspur
250 Seitenstreifen, Mittelstreifen
300 Zusatzeinrichtung
B , B', B", B‴ Bildaufnahmerichtung
HQ Hexagonaler Querschnitt
Q Querschnitt
V , V', V", V‴ Geschwindigkeit
W ,W',W",W‴ Erfassungsstrahl
X Längsachse
XY Horizontale Ebene
Y Querachse
Z Vertikale Achse

## Patentansprüche

1. Verkehrsüberwachungseinrichtung (100) mit einem Gehäuse (110) zur Überwachung mindestens eines Teilbereichs (210) einer Strasse (200); wobei das Gehäuse (110) mindestens einen Innenraum (120) aufweist; wobei im Innenraum (120) mindestens eine Bildaufnahmeeinrichtung (7) angeordnet ist; wobei das Gehäuse (110) für jede Bildaufnahmeeinrichtung (7) mindestens einen transparenten Bereich (8) aufweist; wobei das Gehäuse (110) zumindest teilweise entlang einer weitgehend vertikalen Achse (Z) ausgestaltet ist; wobei die Bildaufnahmeeinrichtung (7) im Gehäuse (110) derart hinter dem transparenten Bereich (8) angeordnet ist, dass der mindestens eine Teilbereich (210) der Strasse (200) mittels der Bildaufnahmeeinrichtung (7) erfassbar ist; wobei eine weitgehend horizontale Ebene (XY) senkrecht zur vertikalen Achse (Z) ist; **dadurch gekennzeichnet, dass** das Gehäuse (110) zumindest in der weitgehend horizontalen Ebene (XY) einen hexagonalen Querschnitt (HQ) aufweist.

2. Verkehrsüberwachungseinrichtung (100) nach Anspruch 1, **dadurch gekennzeichnet, dass** der hexagonale Querschnitt (HQ) eine erste Seite (1), eine zweite Seite (2), eine dritte Seite (3), eine vierte Seite (4), eine fünfte Seite (5), und eine sechste Seite (6) aufweist; dass je zwei Seiten (1,4,3,5,3,6) weitgehend parallel sind.

3. Verkehrsüberwachungseinrichtung (100) nach Anspruch 2, **dadurch gekennzeichnet, dass** die erste Seite (1) in der Ebene einer ersten Wandung liegt (11); dass die zweite (2) Seite in der Ebene einer zweiten Wandung (12) liegt; dass die dritte Seite (3) in der Ebene einer dritten Wandung (13) liegt; dass die vierte Seite (4) in der Ebene einer vierten Wandung (14)liegt; dass die fünfte Seite (5) in der Ebene einer fünften Wandung (15) liegt; dass die sechste Seite (6) in der Ebene einer sechsten Wandung (16) liegt; und dass die erste Wandung (11) und die zweite Wandung (12) und die dritte Wandung (13) und die vierte Wandung (14) und die fünfte Wandung (15) und die sechste Wandung (16) zumindest teilweise parallel zur vertikalen Achse (Z) sind.

4. Verkehrsüberwachungseinrichtung (100) nach Anspruch 3, **dadurch gekennzeichnet, dass** die erste Wandung (11) vollständig lichtundurchlässig ausgestaltet ist; dass die vierte Wandung (14) vollständig lichtundurchlässig ausgestaltet ist; und dass die erste Seite (1) weitgehend parallel zur vierten Seite ausgerichtet (4) ist.

5. Verkehrsüberwachungseinrichtung (100) nach einem der Ansprüche 3 bis 4, **dadurch gekennzeichnet, dass** das Gehäuse (110) zwischen einem und vier transparente Bereiche (8,8',8",8‴) aufweist; dass im Innenraum (120) für jeden transparenten Bereich (8,8',8",8‴) eine Bildaufnahmeeinrichtung (7,7',7",7‴) angeordnet ist; dass jede der Bildaufnahmeeinrichtungen (7,7',7",7‴) im Gehäuse (110) derart hinter dem jeweiligen transparenten Bereich (8,8',8",8‴) angeordnet ist, dass jede Bildaufnahmeeinrichtungen (7,7',7",7‴) eingerichtet ist je einen Teilbereich (210,210',210",210‴) der Strasse (200) zu erfassen; und dass je ein transparenter Bereiche (8,8',8",8‴) in je einer der zweiten Wandung (12) oder dritten Wandung (13) oder fünften Wandung (15) oder sechsten Wandung (16) angeordnet ist.

6. Verkehrsüberwachungseinrichtung (100) nach einem der Ansprüche 3 bis 5, **dadurch gekennzeichnet, dass** der transparente Bereich (8,8',8",8‴) parallel zur Ebene der Wandung (12,13,15,16) angeordnet ist; und dass der Abstand (82) des transparenten Bereichs (8,8',8",8‴) von der Ebene der Wandung (12,13,15,16) zwischen -50 mm und 50 mm beträgt.

7. Verkehrsüberwachungseinrichtung (200) nach einem der Ansprüche 3 bis 6, **dadurch gekennzeichnet, dass** im Gehäuse (110) für jede Bildaufnahmeeinrichtung (7,7',7'',7''') mindestens eine Erfassungseinrichtung (9,9',9",9‴) angeordnet ist; dass die Erfassungseinrichtung (9,9',9",9‴) eingerichtet ist eine Geschwindigkeit (V,V',V",V‴) eines Fahrzeugs (220,220',220",220‴) im jeweiligen Teilbereich (210,210',210",210‴) der Strasse (200) zu ermitteln.

8. Verkehrsüberwachungseinrichtung (100) nach einem der Ansprüche 3 bis 7, **dadurch gekennzeichnet, dass** das Gehäuse (110) für jede Erfassungseinrichtung (9,9',9",9‴) einen Erfassungsbereich (10,10',10",10‴) aufweist; dass die Erfassungseinrichtung (9,9',9",9‴) eingerichtet ist ein Fahrzeug mit mindestens einem Erfassungsstrahl (W,W',W",W‴) zu erfassen, beispielsweise elektromagnetische Strahlung, wie Radarstrahlen, optische Strahlung, Infrarotstrahlung, Ultraviolettstrahlung, oder Schallwellen im hörbaren Bereich, Infraschall oder Ultraschall; und dass der Erfassungsbereich (10,10',10",10‴) durchlässig für den Erfassungsstrahl (W,W',W",W‴) ist.

9. Verkehrsüberwachungseinrichtung (100) nach einem der Ansprüche 3 bis 8, **dadurch gekennzeichnet, dass** jede Bildaufnahmeeinrichtung (7,7',7ʺʺ,7‴) eine Bildaufnahmerichtung (B,B',B",B‴) aufweist; welche Bildaufnahmerichtung (B,B',B",B‴) in der horizontalen Ebene (XY) des hexagonalen Querschnitts (HQ) weitgehend senkrecht zum jeweiligen transparenten Bereich (8,8', 8'', 8''') ist.

10. Verkehrsüberwachungseinrichtung (100) nach einem der Ansprüche 2 bis 9, **dadurch gekennzeichnet, dass** der hexagonale Querschnitt (HQ) einen ersten Winkel (31), einen zweiten Winkel (32), einen dritten Winkel (33), einen vierten Winkel (34), einen fünften Winkel (35) und einen sechsten Winkel (36) aufweist; dass die zweite Seite (2) und die dritte Seite (3) den zweiten Winkel (32) bilden; dass die fünfte Seite (5) und die sechste Seite (6) den fünften Winkel (35) bilden; dass eine Längsachse (X) den zweiten Winkel (32) halbiert; wodurch der zweite Winkel (32) die Ausrichtung der zweiten Seite (2) zur Längsachse (X) bestimmt, wodurch der zweite Winkel (32) die Ausrichtung der dritten Seite (3) zur Längsachse (X) bestimmt; und dass die Längsachse (X) den fünften Winkel (35) halbiert; wodurch der fünfte Winkel (35) die Ausrichtung der sechsten Seite (4) zur Längsachse (X) bestimmt, wodurch der fünfte Winkel (35) die Ausrichtung der fünften Seite (5) zur Längsachse (X) bestimmt.

11. Verkehrsüberwachungseinrichtung (100) nach Anspruch 10, **dadurch gekennzeichnet, dass** der zweite Winkel (32) und der fünfte Winkel (35) die gleiche Grösse aufweisen.

12. Verkehrsüberwachungseinrichtung (100) nach einem der Ansprüche 10 oder 11, **dadurch gekennzeichnet, dass** der hexagonale Querschnitt (HQ) spiegelsymmetrisch bezüglich der Längsachse (X) ausgestaltet ist.

13. Verkehrsüberwachungseinrichtung (100) nach einem der Ansprüche 1 bis 11, **dadurch gekennzeichnet, dass** die horizontale Ebene (XY) weitgehend parallel zu einer Oberfläche (230) der Strasse (200) ausgerichtet ist, und dass der hexagonale Querschnitt (HQ) ein gleichmässiges Sechseck ist.

14. Anordnung einer Verkehrsüberwachungseinrichtung (100) nach einem der Ansprüche 10 bis 12 bezügliche einer Strasse (200), **dadurch gekennzeichnet, dass** die Strasse (200) mindestens eine Fahrspur (240, 240', 240'', 240''') aufweist; dass die Fahrspur (240, 240', 240'', 240''') weitgehend gerade verläuft und dass die erste Seite (1) weitgehend parallel zur Fahrspur (240, 240', 240", 240‴) angeordnet ist; oder dass die Fahrspur(240, 240', 240", 240‴) eine Kurve beschreibt und dass die erste Seite (1) tangential zur Fahrspur (240, 240', 240", 240‴) ausgerichtet ist.

15. Anordnung einer Verkehrsüberwachungseinrichtung (100) nach Anspruch 14, **dadurch gekennzeichnet, dass** durch Einstellung des zweiten Winkels (32) die Ausrichtung der ersten Seite (1) und der zweiten Seite (2) bezüglich der Strasse (200) derart bestimmt ist; und dass die Bildaufnahmeeinrichtung (7,7',7",7‴) zur Strasse (200) ausrichtbar ist.
